# EUROPEAN PATENT APPLICATION

(11) **EP 3 985 993 A1**
(43) Date of publication of application: **20.04.2022**
(21) Application number: 20201715.8
(22) Date of filing: 14.10.2020
(51) Int. Cl.: H04R 1/10, H04R 5/033, G08B 5/36, H04R 29/00, H04R 3/00, G10L 21/10, G10L 25/78, H04S 7/00

(54) **A HEAD-MOUNTED AUDIO ARRANGEMENT, A METHOD AND A COMPUTER PROGRAM**

(71) Applicant: Nokia Technologies Oy, 02610 Espoo (FI)
(72) Inventor: LEPPÄNEN, Jussi, 33580 Tampere (FI); LEHTINIEMI, Arto, 33880 Lempäälä (FI); VILERMO, Miikka, 37200 Siuro (FI)
(74) Representative: Nokia EPO representatives

(57) **Abstract**

A head-mounted audio arrangement (20) comprising:
a first part (61) configured to receive a first input signal (11) and, in dependence upon the first input signal (11), provide a first audio output (21) for a first ear (101) of a user (100);
a second part (62) configured to receive a second input signal (12) and, in dependence upon the second input signal (12), provide a second audio output (22) for a second ear (102) of the user (100); wherein
the first part (61) comprises an exterior portion (24) that is visible to an observer when the first part is head-mounted to provide the first audio output for the first ear of the user;
and the second part (62) comprises an exterior portion (24) that is visible to an observer when the second part is head-mounted to provide the second audio output for the second ear of the user;
wherein
the exterior portion (24) of the first part (61) comprises first exterior visual indication means (31) for providing an exterior visual indication (41) and first exterior microphone means (51) for monitoring first exterior audio (201)
and
the exterior portion (24) of the second part (62) comprises second exterior visual indication means (32) for providing an exterior visual indication (42) and second exterior microphone means (52) for monitoring second exterior audio (202),
wherein the head-mounted audio arrangement (20) is configured to control the first exterior visual indication means (31) in dependence upon the first exterior audio (201) and the first audio output (21) and to control the second exterior visual indication means (32) in dependence upon the second exterior audio (202) and the second audio output (22).

## Description

### TECHNOLOGICAL FIELD

Embodiments of the present disclosure relate to a head-mounted audio arrangement, a method and a computer program.

### BACKGROUND

A head-mounted audio arrangement is an arrangement that is mounted on or in a part of a user's head for the purpose of providing audio output to one or both of the user's ears.

For example, a head-mounted audio arrangement can have one or more parts that are configured to be in-ear, on-ear or over-ear. A part is configured to receive an input signal and, in dependence upon the input signal, provide an audio output (e.g. pressure waves) for an ear of a user.

If there are multiple parts, one for each ear, then the parts can, for example, connect physically or connect wirelessly to each other and/or another device.

Examples of head-mounted audio arrangements include headphones, earphones, earbuds.

### BRIEF SUMMARY

According to various, but not necessarily all, embodiments there is provided
a head-mounted audio arrangement comprising:
a first part configured to receive a first input signal and, in dependence upon the first input signal, provide a first audio output for a first ear of a user;
a second part configured to receive a second input signal and, in dependence upon the second input signal, provide a second audio output for a second ear of the user;
   wherein
the first part comprises an exterior portion that is visible to an observer when the first part is head-mounted to provide the first audio output for the first ear of the user;
and the second part comprises an exterior portion that is visible to an observer when the second part is head-mounted to provide the second audio output for the second ear of the user;
   wherein
the exterior portion of the first part comprises first exterior visual indication means for providing an exterior visual indication and first exterior microphone means for monitoring first exterior audio
   and
the exterior portion of the second part comprises second exterior visual indication means for providing an exterior visual indication and second exterior microphone means for monitoring second exterior audio,
wherein the head-mounted audio arrangement is configured to control the first exterior visual indication means in dependence upon the first exterior audio and the first audio output and to control the second exterior visual indication means in dependence upon the second exterior audio and the second audio output.

In some but not necessarily all examples, the head-mounted audio arrangement comprises means for comparing at least a loudness of monitored first exterior audio with a loudness of the first audio output and means for comparing at least a loudness of monitored second exterior audio with a loudness of the second audio output; and
means for controlling the first exterior visual indication means and the second exterior visual indication means in dependence upon the comparisons.

In some but not necessarily all examples, the first exterior visual indication means and the second exterior visual indication means are independently controlled and can have different visual indication states.

In some but not necessarily all examples, the first exterior visual indication means and the second exterior visual indication means are controlled in dependence upon a direction to a source providing the first exterior audio and the second exterior audio.

In some but not necessarily all examples, the head-mounted audio arrangement comprises means for estimating a directional of arrival of the first exterior audio and a direction of arrival of the second exterior audio.

In some but not necessarily all examples, the first exterior microphone means for monitoring first exterior audio comprises one or more microphones and the
second exterior microphone means for monitoring second exterior audio comprises one or more microphones.

In some but not necessarily all examples, the head-mounted audio arrangement is configured to control the first exterior visual indication means in dependence upon a combination of a state of the first exterior audio and a state of the first audio output, wherein multiple different combinations of states are associated with multiple respective different visual indication states of the first exterior visual indication means
and
the head-mounted audio arrangement is configured to control the second exterior visual indication means in dependence upon a combination of a state of the second exterior audio and a state of the second audio output, wherein multiple different combinations of states are associated with multiple respective different visual indication states of the second exterior visual indication means.

In some but not necessarily all examples, the head-mounted audio arrangement comprises means for processing the first exterior audio monitored by the first exterior microphone means to detect speech from an exterior audio source and means for processing the second exterior audio monitored by the second exterior microphone means to detect speech from an exterior audio source,
wherein the first exterior visual indication means and the second exterior visual indication means are controlled in dependence upon a comparison of a loudness of speech in the first exterior audio with the loudness of the first audio output and a comparison of a loudness of speech in the second exterior audio with the loudness of the second audio output.

In some but not necessarily all examples, a visual state of at least one of the first exterior visual indication means and the second exterior visual indication means is indicative of a likelihood the user hears an observer's speech.

In some but not necessarily all examples, the head-mounted audio arrangement comprises means for processing the exterior audio monitored by the first exterior microphone means and the second exterior microphone means to estimate loudness of at least one exterior audio source.

In some but not necessarily all examples, the head-mounted audio arrangement comprises means for processing the first exterior audio monitored by the first exterior microphone means to recognize speech from an exterior audio source and means for processing the second exterior audio monitored by the second exterior microphone means to recognize speech from an exterior audio source.

In some but not necessarily all examples, the first exterior visual indication means and the second exterior visual indication means are controlled in dependence upon recognition of speech in at least one of the first exterior audio or the second exterior audio.

In some but not necessarily all examples, the head-mounted audio arrangement comprises means for processing the first exterior audio monitored by the first exterior microphone means to recognize speech from an exterior audio source and means for adapting the first audio output and/or the second audio output in dependence upon said recognition and/or means for processing the second exterior audio monitored by the second exterior microphone means to recognize speech from an exterior audio source and means for adapting the second audio output and/or the first audio output in dependence upon said recognition.

In some but not necessarily all examples, the means for adapting the first audio output and/or the second audio output in dependence upon said recognition mutes or attenuates the first audio output and/or the second audio output; and/or replaces the first audio output with live or recorded first exterior audio and/or replaces the second audio output with live or recorded second exterior audio.

According to various, but not necessarily all, embodiments there is provided a method comprising:
controlling a first exterior visual indication means of a left part of a head-mounted audio arrangement, in dependence upon first exterior audio, associated with a left-side of the user and monitored by the head-mounted audio arrangement, and a first audio output by the left part of the head-mounted audio arrangement to a left ear of the user and
controlling a second exterior visual indication means of a right part of the head-mounted audio arrangement, in dependence upon second exterior audio, associated with a right-side of the user and monitored by the head-mounted audio arrangement, and a second audio output by the right part of the head-mounted audio arrangement to a right ear of the user

According to various, but not necessarily all, embodiments there is provided a computer program that when run by a processor of a head-mounted audio arrangement enables the head-mounted audio arrangement to:
control a first exterior visual indication means of a left part of the head-mounted audio arrangement, in dependence upon:
   first exterior audio, associated with a left-side of the user and monitored by the head-mounted audio arrangement, and
   a first audio output by the left part of the head-mounted audio arrangement to a left ear of the user and
controlling a second exterior visual indication means of a right part of the head-mounted audio arrangement, in dependence upon:
   second exterior audio, associated with a right-side of the user and monitored by the head-mounted audio arrangement, and
   a second audio output by the right part of the head-mounted audio arrangement to a right ear of the user.

According to various, but not necessarily all, embodiments there is provided examples as claimed in the appended claims.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3A, 3B, 3C show other examples of the subject matter described herein;
FIG. 4 shows another example of the subject matter described herein;
FIG. 5A, 5B, 5C, 5D show other examples of the subject matter described herein;
FIG. 6 shows another example of the subject matter described herein;
FIG. 7 shows another example of the subject matter described herein;
FIG. 8A shows another example of the subject matter described herein;
FIG. 8B shows another example of the subject matter described herein.

### DETAILED DESCRIPTION

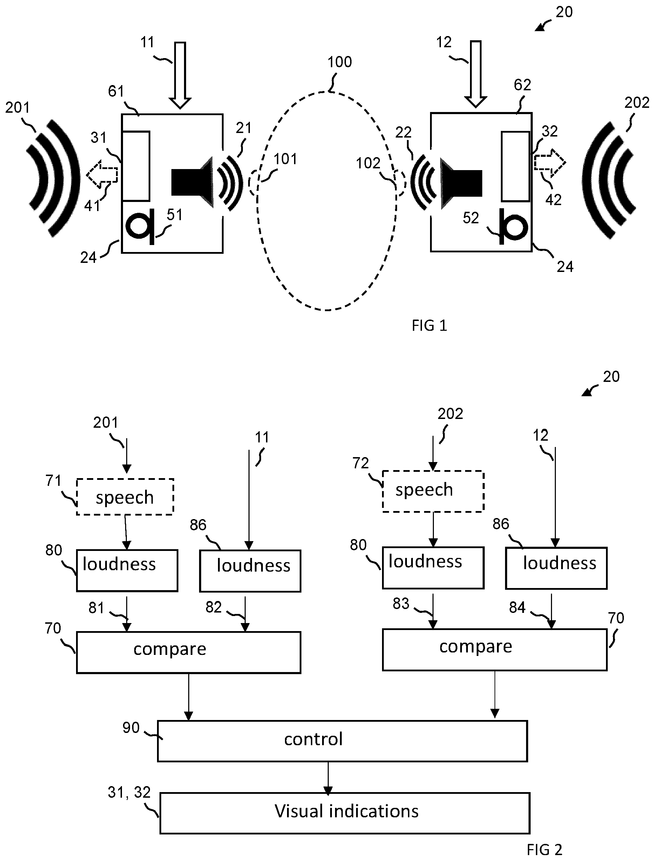

FIGs 1 illustrates examples of a head-mounted audio arrangement 20 comprising:
a first part 61 configured to receive a first input signal 11 and, in dependence upon the first input signal 11, provide a first audio output 21 for a first ear 101 of a user 100; and
a second part 62 configured to receive a second input signal 12 and, in dependence upon the second input signal 12, provide a second audio output 22 for a second ear 102 of the user 100.

A head-mounted audio arrangement 20 is an arrangement that is mounted on or in a part of a user's 100 head for the purpose of providing audio output to one or both of the user's ears.

For example, the head-mounted audio arrangement 20 can have parts 61. 62 that are configured to be in-ear, on-ear or over-ear. The parts 61, 62 can, for example, connect physically or connect wirelessly to each other and/or another device to receive the respective input signals 11, 12. Examples of head-mounted audio arrangements 20 include headphones, earphones, earbuds. It will be appreciated that FIG 1 is a schematic illustration of the head-mounted audio arrangement 20 and that the illustration of the parts 61, 62 are functional representations that are not to scale and that do not represent a shape of the parts 61, 62.

The term 'head-mounted' does not imply that the head-mounted audio arrangement 20 is mounted on a head, rather, it connotes that the head-mounted audio arrangement 20 is configured to be mounted on a head. That, it is has characteristics that make it suitable for head-mounted use.

The first part 61 comprises an exterior portion 24 that is visible to an observer who is an exterior audio source 200 (not illustrated in this FIG) when the first part 61 is head-mounted to provide the first audio output 21 for the first ear 101 of the user 100.

The second part 62 comprises an exterior portion 24 that is visible to an observer (not illustrated in this FIG) when the second part 62 is head-mounted to provide the second audio output 22 for the second ear 102 of the user 100.

The exterior portion 24 of the first part 61 comprises first exterior visual indication means 31 for providing an exterior visual indication 41 (if required) and first exterior microphone means 51 for monitoring first exterior audio 201 (if present).

The exterior portion 24 of the second part 62 comprises second exterior visual indication means 32 for providing an exterior visual indication 42 if required) and second exterior microphone means 52 for monitoring second exterior audio 202 (if present).

The head-mounted audio arrangement 20 is configured to control the first exterior visual indication means 31 in dependence upon the first exterior audio 201 and the first audio output 21 and to control the second exterior visual indication means 32 in dependence upon the second exterior audio 202 and the second audio output 22.

As illustrated in the example of FIG 2, the head-mounted audio arrangement 20 can comprise comparison means 70 for comparing at least a loudness 81 of monitored first exterior audio 201 with a loudness 82 of the first audio output 21 and comparison means 70 for comparing at least a loudness 83 of monitored second exterior audio 202 with a loudness 84 of the second audio output 22.

In some but not necessarily all examples, the first part 61 comprises comparison means 70 for comparing at least a loudness 81 of monitored first exterior audio 201 with a loudness 82 of the first audio output 21 and the second part 62 comprises comparison means 70 for comparing at least a loudness 83 of monitored second exterior audio 202 with a loudness 84 of the second audio output 22.

The head-mounted audio arrangement 20 can comprise means 90 for controlling the first exterior visual indication means 31 and/or the second exterior visual indication means 32 in dependence upon the comparisons.

In some but not necessarily all examples, the first part 61 comprises means 90 for controlling the first exterior visual indication means 31 and the second part 62 comprises means 90 for controlling the second exterior visual indication means 32 in dependence upon the comparisons.

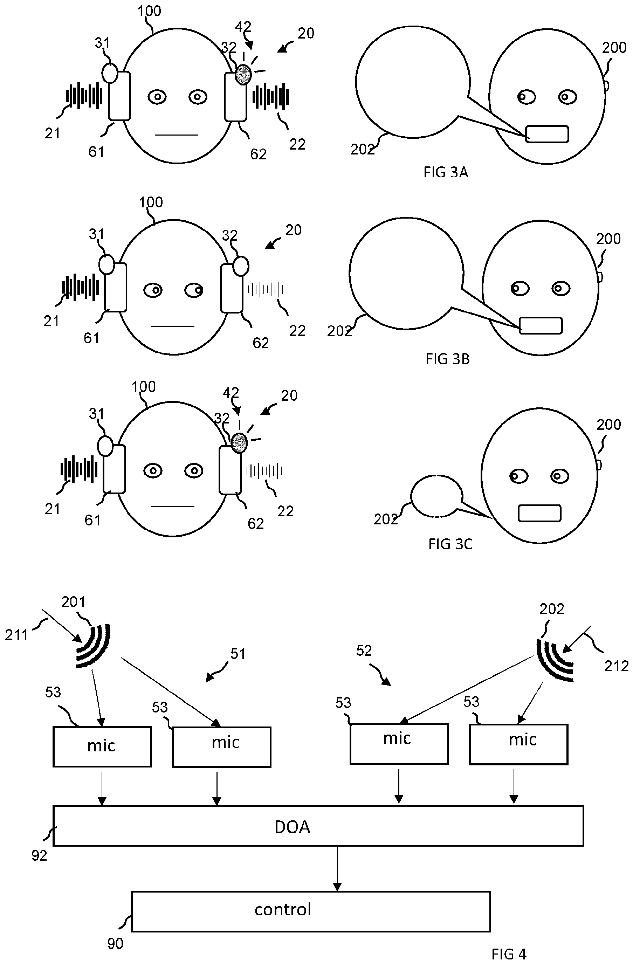

In some but not necessarily all examples, the head-mounted audio arrangement 20 comprises means 80 for processing the first exterior audio 201 monitored by the first exterior microphone means 51 to estimate the loudness 81 of monitored first exterior audio 201 and comprises means 80 for processing the second exterior audio 202 monitored by the second exterior microphone means 52 to estimate the loudness 83 of monitored second exterior audio 202. The processing means 80 can therefore
estimate loudness of an exterior audio source 200 (illustrated in FIG 3, for example).

In some but not necessarily all examples, the first part 61 comprises means 80 for processing the first exterior audio 201 monitored by the first exterior microphone means 51 to estimate the loudness 81 of monitored first exterior audio 201 and the second part 62 comprises means 80 for processing the second exterior audio 202 monitored by the second exterior microphone means 52 to estimate the loudness 83 of monitored second exterior audio 202.

In some but not necessarily all examples, the head-mounted audio arrangement 20 comprises means 86 for processing the first input signal 11 to determine a loudness of the first audio output 21 and means 86 for processing the second input signal 12 to determine a loudness of the second audio output 22. The processing means 86, can in some examples, obtain the loudness from metadata within the input signals 11.

In some but not necessarily all examples, the first part 61 comprises means 86 for processing the first input signal 11 to determine a loudness of the first audio output 21 and the second part 62 comprises means 86 for processing the second input signal 12 to determine a loudness of the second audio output 22.

The head-mounted audio arrangement 20 can be configured to continuously analyze the loudness 82, 84 of the first and second audio outputs 21, 22 heard by the user 100 via the head-mounted audio arrangement.

The head-mounted audio arrangement 20 can be configured to continuously analyze the exterior audio 201, 202 external to the user 100 captured by the microphone means 51, 52.

The head-mounted audio arrangement 20 can, in some examples, be configured to continuously store (record or buffer) the exterior audio 201, 202 external to the user 100 captured by the microphone means 51, 52.

In some but not necessarily all examples, the head-mounted audio arrangement 20 comprises means 71 for processing the first exterior audio 201 monitored by the first exterior microphone means 51 to detect speech from an exterior audio source 200 (not illustrated in FIG 2, illustrated in FIG 3). The head-mounted audio arrangement 20 also comprises means 72 for processing the second exterior audio 202 monitored by the second exterior microphone means 52 to detect speech from an exterior audio source 200 (not illustrated in FIG 2, illustrated in FIG 3).

In this example, the first exterior visual indication means 31 and the second exterior visual indication means 32 are controlled in dependence upon a comparison, by comparison means 70, of a loudness 81 of speech in the first exterior audio 201 with the loudness 82 of the first audio output 21 and a comparison of a loudness 83 of speech in the second exterior audio 202 with the loudness of the second audio output 22.

It will be appreciated that any one or more of these loudness may be small values or zero-valued. For example, the first audio output 21 could be quiet with the loudness 81 of the first audio output 21 being small or zero. For example, the second audio output 22 could be quiet with the loudness 82 of the second audio output 22 being small or zero.

In some but not necessarily all examples, a visual state of the first exterior visual indication means 31 and a visual state of the second exterior visual indication means 32 are indicative of a likelihood the user 100 hears an observer's speech (exterior audio source 200).

In the examples illustrated in FIGs 3A, 3B, 3C whenever the system detects speech in the exterior audio 201, 202, it determines its loudness. The system then compares this loudness value with the loudness value of the first and second audio outputs 21, 22 to determine whether or not the user 100 hears the speech in one or both ears. If the user 100 does not hear the speech at an ear 101, 102, an indicator light (exterior indication means 31, 32) associated with that ear is flashed. In at least some examples, only the indicator light in the direction of arrival of the speech is flashed.

Several different types of indication states are possible for multiple situations.

The first exterior visual indication means 31 and the second exterior visual indication means 32 are independently controlled and can have different visual indication states.

In some but not necessarily all examples, the first exterior visual indication means 31 and the second exterior visual indication means 32 are controlled in dependence upon a direction to an exterior audio source 200 providing the first exterior audio 201 and the second exterior audio 202.

In at least some examples, the head-mounted audio arrangement 20 is configured to control the first exterior visual indication means 31 in dependence upon a combination of a state of the first exterior audio 201 and a state of the first audio output 21, wherein multiple different combinations of states are associated with multiple respective different visual indication states of the first exterior visual indication means 31. The head-mounted audio arrangement 20 is configured to control the second exterior visual indication means 32 in dependence upon a combination of a state of the second exterior audio 202 and a state of the second audio output 22, wherein multiple different combinations of states are associated with multiple respective different visual indication states of the second exterior visual indication means 32.

The examples illustrated in FIGs 3A, 3B, 3C illustrate a situation when an exterior audio source 200 provides second exterior audio 202 and there is control of the second exterior visual indication means 32 in dependence upon a combination of a state of the second exterior audio 202 and a state of the second audio output 22. However, if the exterior audio source where to remain fixed and the user where to rotate 180 degrees, then the exterior audio source 200 would provide first exterior audio 201 and there would be control of the first exterior visual indication means 31 in dependence upon a combination of a state of the first exterior audio 201 and a state of the first audio output 21.

In the example of FIG 3A, the second exterior audio 202 is loud and the second audio output 22 is loud. The second exterior audio 202 is too quiet (insufficiently loud) compared to the second audio output 22. It is determined that the user probably cannot hear the second exterior audio 202 with this combination of states and the second exterior visual indication means 32 is controlled to have, as visual indication 42, an alert state. In this example an indicator light is turned on indicating that the exterior audio source 200 cannot be heard.

In the example of FIG 3B, the second exterior audio 202 is loud and the second audio output 22 is relatively quiet. The second exterior audio 202 is loud enough compared to the second audio output 22. A threshold may be used to determine what difference between the loudness of the second exterior audio 202 and the second audio output 22 is sufficient for the second exterior audio 202 to be heard by the user 100. The threshold can, for example, be calibrated by a user, selected by a user or be pre-determined. The threshold can, for example, be dependent upon the audio isolation provided by the parts 61, 62 between the user's ears 101, 102 and the environment external to the parts, where the exterior audio source 200 is located.

It is determined that the user probably can hear the second exterior audio 202 with this combination of states and the second exterior visual indication means 32 is controlled to have, as visual indication 42, a non-alert state. In this example an indicator light is turned off (not turned on) indicating that the exterior audio source 200 can be heard.

In the example of FIG 3C, the second exterior audio 202 is relatively quiet and the second audio output 22 is relatively loud. The second exterior audio 202 is too quiet (insufficiently loud) compared to the second audio output 22. It is determined that the user probably cannot hear the second exterior audio 202 with this combination of states and the second exterior visual indication means 32 is controlled to have, as visual indication 42, an alert state. In this example an indicator light is turned on indicating that the exterior audio source 200 cannot be heard.

As illustrated in FIG 4, in some but not necessarily all examples, the first exterior microphone means 51 for monitoring first exterior audio 201 comprises one or more microphones 53 and the second exterior microphone means 52 for monitoring second exterior audio 202 comprises one or more microphones 53.

In this example, the head-mounted audio arrangement 20 comprises means 92 for estimating a direction of arrival (DOA) 211 of the first exterior audio 201 (if present) and a direction of arrival (DOA) 212 of the second exterior audio 202 (if present).

The level and arrival time differences between exterior audio 201, 202 captured by the microphones 53 can be used for direction of arrival estimation. For example, if the same sound in first exterior audio 201 is detected with an amplitude/delay difference at different microphones 53 in an array of microphones of the first microphone means 51, then the beamformer equation can be used to determine the direction of arrival 211 of that sound in the first exterior audio 201. For example, if the same sound in second exterior audio 202 is detected with an amplitude/delay difference at different microphones 53 in an array of microphones of the second microphone means 52, then the beamformer equation can be used to determine the direction of arrival 212 of that sound in the second exterior audio 202.

As previously described, the exterior audio 201, 202 can be pre-processed to detect speech. Therefore, in this example, the head-mounted audio arrangement 20 can comprise means 92 for estimating a directional of arrival 211 of speech in the first exterior audio 201 and a direction of arrival 212 of speech in the second exterior audio 202.

In at least some examples, only the visual indication means in the direction of arrival of the speech is activated by control means 90 (e.g. FIG 3A, 3C).

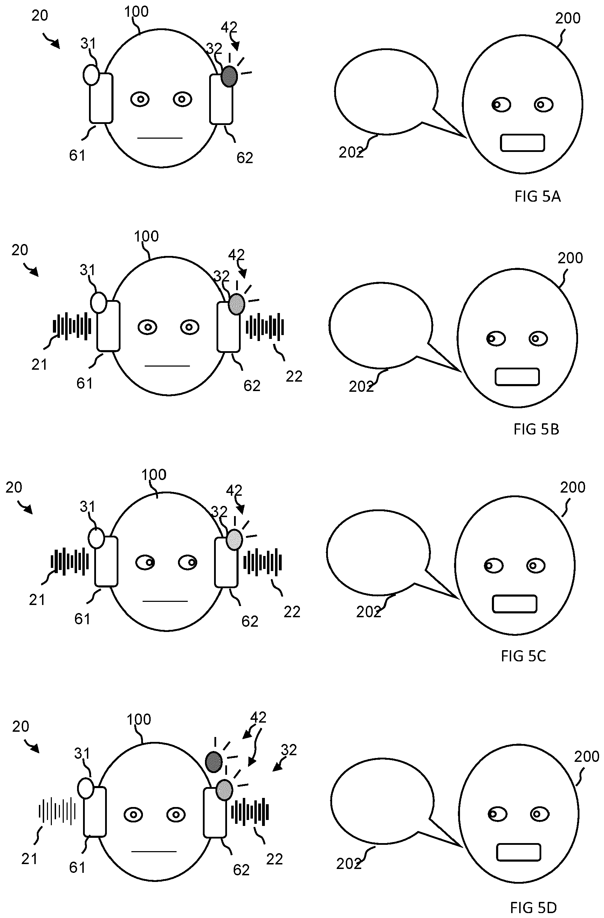

The visual indication means 31, 32 can, in some examples, be controlled by control means 90 in dependence upon context. FIGs 5A, 5B, 5C, 5D show how the visual indication states of a second visual indication means 32 changes depending on if there is second audio output 22 and whether or not the second exterior audio 202 comprises speech heard by the user 100.

In FIG 5A, there is high audio isolation provided by the parts 61, 62 between the user's ears 101, 102 and the environment external to the parts, where the exterior audio source 200 is located. The second exterior audio 202 is loud and the second audio output 22 is non-existent (or relatively quiet). The second exterior audio 202 is not loud enough compared to the second audio output 22. The second exterior audio 202 is too quiet (insufficiently loud) compared to the second audio output 22. It is determined that the user probably cannot hear the second exterior audio 202 with this combination of states and the second exterior visual indication means 32 is controlled to have, as visual indication 42, an alert state. In this example an indicator light is turned on indicating that the exterior audio source 200 cannot be heard. The color of the light (e.g. red) additionally indicates a state of the second audio output 22, that it is non-existent (or relatively quiet).

In FIG 5B, the second exterior audio 202 is loud and the second audio output 22 is loud. The second exterior audio 202 is too quiet (insufficiently loud) compared to the second audio output 22. It is determined that the user probably cannot hear the second exterior audio 202 with this combination of states and the second exterior visual indication means 32 is controlled to have, as visual indication 42, an alert state. In this example an indicator light is turned on indicating that the exterior audio source 200 cannot be heard. The color of the light (e.g. yellow) additionally indicates a state of the second audio output 22, that it is relatively loud.

In the example of FIG 5C, the second exterior audio 202 is loud and the second audio output 22 is relatively quiet. The second exterior audio 202 is loud enough compared to the second audio output 22. It is determined that the user probably can hear the second exterior audio 202 with this combination of states and the second exterior visual indication means 32 is controlled to have, as visual indication 42, a non-alert state. In this example an indicator light is turned green indicating that the exterior audio source 200 can be heard.

In FIG 5D, the second exterior audio 202 is loud and the second audio output 22 is loud but the first audio output 21 is quiet. The second exterior audio 202 is too quiet (insufficiently loud) compared to the second audio output 22. It is determined that the user probably cannot hear the second exterior audio 202 with this combination of states. However, if the second exterior audio 202 where to become first exterior audio 201 it would be sufficiently loud compared to the first audio output 21. It is determined that the user probably could hear the exterior audio that is currently the second exterior audio 202 if it were to switch sides and become the first exterior audio 201 with this combination of states. The second exterior visual indication means 32 is controlled to have, as visual indication 42, an alert state. In this example an indicator light is turned on indicating that the exterior audio source 200 cannot be heard. The color of the light (e.g. changing colour) additionally indicates a state of the second audio output 22, that it is relatively loud but, in addition, indicates that switching to the other side of the user 100 would result in being heard.

In the foregoing examples, the operation of the head-mounted audio arrangement 20 is left/right symmetric. The functionality described as interaction between the second part 62 and the second exterior audio 202 would be the same for interaction between the first part 61 and the first exterior audio 201, and vice versa.

In the examples described, when there is a first loudness 81 of monitored first exterior audio 201, a second loudness 82 of the first audio output 21, a third loudness 83 of monitored second exterior audio 202 and a fourth loudness 84 of the second audio output 22 that results in the first exterior visual indication means 31 having a first state and the second exterior visual indication means 32 having a second state, that is visually different to the first state, then when there is a first loudness of monitored second exterior audio 202, a second loudness of the second audio output 22,
a third loudness of monitored first exterior audio 201 and a fourth loudness of the first audio output 21 it will result in the second exterior visual indication means 32 having the first state and the first exterior visual indication means 31 having the second state.

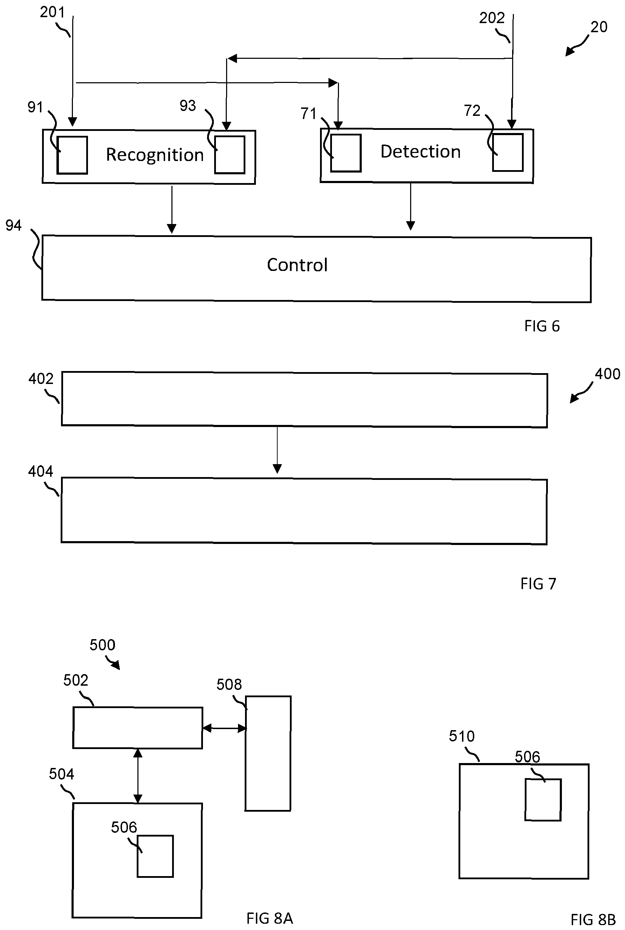

FIG 6, illustrates an example of the head-mounted audio arrangement 20

Speech detection means 71, 72 has previously been described with reference to FIG 2.

In this example, the head-mounted audio arrangement 20 comprises a speech recognition means 91, 93 for recognising speech from an exterior audio source 200.

The recognition of the exterior audio source 200 can, for example, be achieved by using facial recognition of recorded video or by recognising speech in the exterior audio 201, 202. The head-mounted audio arrangement 20 comprises control means 94 that is responsive to the speech detection means 71, 72 and/or speech recognition means 91, 93. The control means 94 can be configured to control operation of the head-mounted audio arrangement 20.

In some examples, the head-mounted audio arrangement 20 comprises means 91 for processing the first exterior audio 201 monitored by the first exterior microphone means 51 to recognize speech from an exterior audio source 200 and means 93 for processing the second exterior audio 202 monitored by the second exterior microphone means 52 to recognize speech from an exterior audio source 200.

In some examples, the first exterior visual indication means 31 and the second exterior visual indication means 32 are controlled by control means 94 in dependence upon recognition of speech in the first exterior audio 201 and recognition of speech in the second exterior audio 202. For example, visual indications 41, 42 will only be enabled towards persons who are recognized as known to the user 100. For unknown persons, the visual indications are disabled.

In some examples, the head-mounted audio arrangement 20 comprises means 91, 82 for processing the exterior audio 201, 202 monitored by the first exterior microphone means 51 to recognize speech from an exterior audio source 200 and control means 94 for adapting the first audio output 21 and/or the second audio output 22 in dependence upon said recognition. The control means 94 can, for example, perform different actions based on the recognition.

The recognition can, for example, be recognition of audio as speech, or recognition of a keyword within speech, or recognition of an origin of the speech.

The control means 94 for adapting the first audio output 21 and/or the second audio output 22 in dependence upon said recognition can be configured to:
mute or attenuate the first audio output 21 and/or the second audio output 22; and/or
replace the first audio output 21 with live or recorded first exterior audio 201 and/or replace the second audio output 22 with live or recorded second exterior audio 202.

For example, the speech (exterior audio 201, 202) from the recognised observer (exterior audio source 200) speaking is played to the user via the first audio output 21 and/or the second audio output 22. If the observer speaking is to the left of the user then the speech from the observer can be rendered via the audio output of the left part 61, 62 and if the observer speaking is to the right of the user 100 then the speech from the observer can be rendered via the audio output of the right part 62, 61. The speech can be stored (recorded or buffered) before being played to the user 100. The speech played can replace or augment current audio output 21, 22. The loudness of the speech played can be dependent upon a loudness 82, 84 of the current audio output 21, 22 and/or a loudness 81, 83 of the speech. This example could also be performed without recognition of the observer (exterior audio source 200) speaking.

For example, the first audio output 21 and/or the second audio output 22 can be paused, muted or controlled to have a reduced loudness if the observer (exterior audio source 200) speaking is recognised as a particular person. The user 100 can, for example, define those particular persons. This example could also be performed without recognition of the observer speaking. The first or second audio output 21, 22 paused/ muted/ attenuated can be the one nearest the observer.

For example, detection means 71, 72 can detect a keyword with the speech. The keywords can, for example, be defined by the user 100. The keyword could, for example, be the name of the user 100 or a moniker of the user 100. The first audio output 21 and/or the second audio output 22 can be paused, muted or be controlled to have a reduced loudness if the keyword is detected. The first or second audio output 21, 22 paused/ muted/ attenuated can be the one nearest the observer (exterior audio source 200).

In one particular use case, the user 100 is participating in a teleconference. The user 100 does not hear his friend, the exterior audio source 200, talking to him so he does not reply. Without the invention, his friend, however, does not know whether the user 100 does not hear him and whether or not to speak louder, or whether the user 100 is actively ignoring him. Furthermore, the observer does not know whether or not there is audio content playing to the user 100. These situations can be common and can have a significant effect on social interaction between the user 100 and the observer.

The visual indication 41. 42 can inform the observer (exterior audio source 200) that the user 100 can hear verbal communication attempts made towards him (FIG 3B, 5C), and/or that the user 100 cannot hear verbal communication attempts made towards him (FIG 3A, 3C, 5A, 5B, 5D). This visual indication 41, 42 can inform the observer of the reason why the user 100 cannot hear the observer (FIG 5A (isolation), FIG 5B (loudness); FIG 5D (position)). This visual indication 41, 42 can inform the observer of the ability of the user 100 to hear verbal communication attempts made towards him if the observer speaks more loudly (FIG 5B) or changes location (FIG 5D).

FIG 7 illustrates an example of a method 400. In this example, the method 400 is for controlling external visual indications from a head-mounted audio arrangement 20.

The method 400 comprises, at block 402: controlling a first exterior visual indication means 31 of a left part of a head-mounted audio arrangement 20, in dependence upon first exterior audio 201, associated with a left-side of the user 100 and monitored by the head-mounted audio arrangement 20, and a first audio output 21 by the left part of the head-mounted audio arrangement 20 to a left ear of the user 100.

The method 400 comprises, at block 402:
controlling a second exterior visual indication means 32 of a right part of the head-mounted audio arrangement 20, in dependence upon second exterior audio 202, associated with a right-side of the user 100 and monitored by the head-mounted audio arrangement 20, and a second audio output 22 by the right part of the head-mounted audio arrangement 20 to a right ear of the user 100.

Fig 8A illustrates an example of a controller 500. The controller can be used to perform all or some of the functions of one or more of the variously described means e.g. comparison means 70; loudness estimation means 80, 86; control means 90; DOA estimation means 92; recognition means 91, 93; detection means 71, 72; control means 94.

Implementation of a controller 500 may be as controller circuitry. The controller 500 may be implemented in hardware alone, have certain aspects in software including firmware alone or can be a combination of hardware and software (including firmware).

As illustrated in Fig 8A the controller 500 may be implemented using instructions that enable hardware functionality, for example, by using executable instructions of a computer program 506 in a general-purpose or special-purpose processor 502 that may be stored on a computer readable storage medium (disk, memory etc.) to be executed by such a processor 502.

The processor 502 is configured to read from and write to the memory 504. The processor 502 may also comprise an output interface via which data and/or commands are output by the processor 502 and an input interface via which data and/or commands are input to the processor 502.

In this example a user interface module 508 is configured to enable a user 100 to control the head-mounted audio arrangement 20. It can, for example, be used for user-definition of parameters previous described.

The memory 504 stores a computer program 506 comprising computer program instructions (computer program code) that controls the operation of the apparatus (e.g. the head-mounted audio arrangement 20) when loaded into the processor 502. The computer program instructions, of the computer program 506, provide the logic and routines that enables the apparatus to perform the methods illustrated in Figs 1 to 7. The processor 502 by reading the memory 504 is able to load and execute the computer program 506.

The apparatus therefore comprises:
at least one processor 502; and
at least one memory 504 including computer program code
the at least one memory 504 and the computer program code configured to, with the at least one processor 502, cause the apparatus at least to perform:
   controlling a first exterior visual indication means 31 of a left part of a head-mounted audio arrangement, in dependence upon first exterior audio 201, associated with a left-side of the user 100 and monitored by the head-mounted audio arrangement 20, and a first audio output 21 by the left part of the head-mounted audio arrangement to a left ear of the user 100; and controlling a second exterior visual indication means 32 of a right part of the head-mounted audio arrangement 20, in dependence upon second exterior audio 202, associated with a right-side of the user 100 and monitored by the head-mounted audio arrangement 20, and a second audio output 22 by the right part of the head-mounted audio arrangement to a right ear of the user 100.

As illustrated in Fig 8B, the computer program 506 may arrive at the apparatus via any suitable delivery mechanism 510. The delivery mechanism 510 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 506. The delivery mechanism may be a signal configured to reliably transfer the computer program 506. The apparatus (e.g. the head-mounted audio arrangement 20) may propagate or transmit the computer program 506 as a computer data signal.

Computer program instructions for causing an apparatus (e.g. the head-mounted audio arrangement 20) to perform at least the following or for performing at least the following: control a first exterior visual indication means 31 of a left part of the head-mounted audio arrangement, in dependence upon:
first exterior audio 201, associated with a left-side of the user 100 and monitored by the head-mounted audio arrangement, and
a first audio output 21 by the left part of the head-mounted audio arrangement to a left ear of the user 100 and
controlling a second exterior visual indication means 32 of a right part of the head-mounted audio arrangement 20, in dependence upon:
   second exterior audio 202, associated with a right-side of the user 100 and monitored by the head-mounted audio arrangement, and
   a second audio output 22 by the right part of the head-mounted audio arrangement to a right ear of the user 100.

The computer program instructions may be comprised in a computer program, a non-transitory computer readable medium, a computer program product, a machine readable medium. In some but not necessarily all examples, the computer program instructions may be distributed over more than one computer program.

Although the memory 504 is illustrated as a single component/circuitry it may be implemented as one or more separate components/circuitry some or all of which may be integrated/removable and/or may provide permanent/semi-permanent/ dynamic/cached storage.

Although the processor 502 is illustrated as a single component/circuitry it may be implemented as one or more separate components/circuitry some or all of which may be integrated/removable. The processor 502 may be a single core or multi-core processor. References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 1 to 7 may represent steps in a method and/or sections of code in the computer program 506. The illustration of a particular order to the blocks does not necessarily imply that there is a required or preferred order for the blocks and the order and arrangement of the block may be varied. Furthermore, it may be possible for some blocks to be omitted.

Different features are shown as interconnected in the FIGs. These may be operationally coupled and any number or combination of intervening elements can exist (including no intervening elements).

Where a structural feature has been described, it may be replaced by means for performing one or more of the functions of the structural feature whether that function or those functions are explicitly or implicitly described.

The recording of data may comprise only temporary recording, or it may comprise permanent recording or it may comprise both temporary recording and permanent recording. Temporary recording implies the recording of data temporarily. This may, for example, occur during sensing or image capture, occur at a dynamic memory, occur at a buffer such as a circular buffer, a register, a cache or similar. Permanent recording implies that the data is in the form of an addressable data structure that is retrievable from an addressable memory space and can therefore be stored and retrieved until deleted or over-written, although long-term storage may or may not occur. The use of the term 'capture' relates to temporary recording of the data. The use of the term 'store' relates to permanent or temporary recording of the data of the image.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

The above described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A head-mounted audio arrangement comprising:
a first part configured to receive a first input signal and, in dependence upon the first input signal, provide a first audio output for a first ear of a user;
a second part configured to receive a second input signal and, in dependence upon the second input signal, provide a second audio output for a second ear of the user;
wherein
the first part comprises an exterior portion that is visible to an observer when the first part is head-mounted to provide the first audio output for the first ear of the user;
and the second part comprises an exterior portion that is visible to an observer when the second part is head-mounted to provide the second audio output for the second ear of the user;
wherein
the exterior portion of the first part comprises first exterior visual indication means for providing an exterior visual indication and first exterior microphone means for monitoring first exterior audio
and
the exterior portion of the second part comprises second exterior visual indication means for providing an exterior visual indication and second exterior microphone means for monitoring second exterior audio,
wherein the head-mounted audio arrangement is configured to control the first exterior visual indication means in dependence upon the first exterior audio and the first audio output and to control the second exterior visual indication means in dependence upon the second exterior audio and the second audio output.

2. A head-mounted audio arrangement as claimed in claim 1, comprising:
means for comparing at least a loudness of monitored first exterior audio with a loudness of the first audio output and means for comparing at least a loudness of monitored second exterior audio with a loudness of the second audio output; and
means for controlling the first exterior visual indication means and the second exterior visual indication means in dependence upon the comparisons.

3. A head-mounted audio arrangement as claimed in claim 1 or 2, wherein the first exterior visual indication means and the second exterior visual indication means are independently controlled and can have different visual indication states.

4. A head-mounted audio arrangement as claimed in claim 3, wherein the first exterior visual indication means and the second exterior visual indication means are controlled in dependence upon a direction to a source providing the first exterior audio and the second exterior audio.

5. A head-mounted audio arrangement as claimed in any preceding claim, comprising means for estimating a directional of arrival of the first exterior audio and a direction of arrival of the second exterior audio.

6. A head-mounted audio arrangement as claimed in any preceding claim, wherein the first exterior microphone means for monitoring first exterior audio comprises one or more microphones and the
second exterior microphone means for monitoring second exterior audio comprises one or more microphones.

7. A head-mounted audio arrangement as claimed in any preceding claim,
wherein the head-mounted audio arrangement is configured to control the first exterior visual indication means in dependence upon a combination of a state of the first exterior audio and a state of the first audio output, wherein multiple different combinations of states are associated with multiple respective different visual indication states of the first exterior visual indication means
and
wherein the head-mounted audio arrangement is configured to control the second exterior visual indication means in dependence upon a combination of a state of the second exterior audio and a state of the second audio output, wherein multiple different combinations of states are associated with multiple respective different visual indication states of the second exterior visual indication means.

8. A head-mounted audio arrangement as claimed in any preceding claim, comprising means for processing the first exterior audio monitored by the first exterior microphone means to detect speech from an exterior audio source and means for processing the second exterior audio monitored by the second exterior microphone means to detect speech from an exterior audio source,
wherein the first exterior visual indication means and the second exterior visual indication means are controlled in dependence upon a comparison of a loudness of speech in the first exterior audio with the loudness of the first audio output and a comparison of a loudness of speech in the second exterior audio with the loudness of the second audio output.

9. A head-mounted audio arrangement as claimed in any preceding claim, wherein a visual state of at least one of the first exterior visual indication means and the second exterior visual indication means is indicative of a likelihood the user hears an observer's speech.

10. A head-mounted audio arrangement as claimed in any preceding claim, comprising means for processing the exterior audio monitored by the first exterior microphone means and the second exterior microphone means to estimate loudness of at least one exterior audio source.

11. A head-mounted audio arrangement as claimed in any preceding claim, comprising means for processing the first exterior audio monitored by the first exterior microphone means to recognize speech from an exterior audio source and means for processing the second exterior audio monitored by the second exterior microphone means to recognize speech from an exterior audio source,
wherein the first exterior visual indication means and the second exterior visual indication means are controlled in dependence upon recognition of speech in at least one of the first exterior audio or the second exterior audio.

12. A head-mounted audio arrangement as claimed in any preceding claim, comprising means for processing the first exterior audio monitored by the first exterior microphone means to recognize speech from an exterior audio source and means for adapting the first audio output and/or the second audio output in dependence upon said recognition and/or means for processing the second exterior audio monitored by the second exterior microphone means to recognize speech from an exterior audio source and means for adapting the second audio output and/or the first audio output in dependence upon said recognition.

13. A head-mounted audio arrangement as claimed in claim 12, wherein the means for adapting the first audio output and/or the second audio output in dependence upon said recognition
mutes or attenuates the first audio output and/or the second audio output; and/or
replaces the first audio output with live or recorded first exterior audio and/or replaces the second audio output with live or recorded second exterior audio.

14. A method comprising:
controlling a first exterior visual indication means of a left part of a head-mounted audio arrangement, in dependence upon first exterior audio, associated with a left-side of the user and monitored by the head-mounted audio arrangement, and a first audio output by the left part of the head-mounted audio arrangement to a left ear of the user and
controlling a second exterior visual indication means of a right part of the head-mounted audio arrangement, in dependence upon second exterior audio, associated with a right-side of the user and monitored by the head-mounted audio arrangement, and a second audio output by the right part of the head-mounted audio arrangement to a right ear of the user

15. A computer program that when run by a processor of a head-mounted audio arrangement enables the head-mounted audio arrangement to:
control a first exterior visual indication means of a left part of the head-mounted audio arrangement, in dependence upon:
first exterior audio, associated with a left-side of the user and monitored by the head-mounted audio arrangement, and
a first audio output by the left part of the head-mounted audio arrangement to a left ear of the user and
controlling a second exterior visual indication means of a right part of the head-mounted audio arrangement, in dependence upon:
second exterior audio, associated with a right-side of the user and monitored by the head-mounted audio arrangement, and
a second audio output by the right part of the head-mounted audio arrangement to a right ear of the user.
